# EUROPÄISCHE PATENTANMELDUNG

(11) **EP 2 138 401 A1**
(43) Veröffentlichungstag der Anmeldung: **30.12.2009**
(21) Anmeldenummer: 08158766.9
(22) Anmeldetag: 23.06.2008
(51) Int. Cl.: B64D 47/06

(54) **Warnleuchte für ein Luftfahrzeug**

(71) Anmelder: Goodrich Lighting Systems GmbH, 59557 Lippstadt (DE); Airbus Deutschland GmbH, 21129 Hamburg (DE)
(72) Erfinder: Kohlmeier-Beckmann, Carsten, 21614, Buxtehude (DE); Griesbach, Martin, 59423, Unna (DE); Müller, Bernhard, 59823, Arnsberg (DE); Ferling, Sonja, 33098, Paderborn (DE); Heßling, Andre, 56179, Vallendar (DE); Lüder, Sascha, 33397, Rietberg (DE)
(74) Vertreter: Hilleringmann, Jochen

(57) **Zusammenfassung**

Die Warnleuchte für ein Luftfahrzeug ist versehen mit einem Gehäuse (10), das eine im am Luftfahrzeug montierten Zustand des Gehäuses der Umgebungsluft ausgesetzte lichtdurchlässige Abdeckung (12) mit einem vorderen Abdeckungsbereich und einem hinteren Abdeckungsbereich aufweist, einem Montagehalteelement (44) zur Befestigung der Abdeckung an einem Unterteil (14) des Gehäuses (10), wobei ein Rand (42) der Abdeckung (12) von einem Rand des Montagehalteelements (44) überdeckt ist und von diesem aufragt, einem Leuchtmittel mit mindestens einer LED (42,46,58,60), die innerhalb eines von der Abdeckung (12) begrenzten Bereichs angeordnet ist, und einem Kühlkörper (18) für die mindestens eine LED (42,46,58,60), wobei der Kühlkörper (18) eine im am Luftfahrzeug montierten Zustand des Gehäuses (10) der Umgebungsluft ausgesetzte Kühloberfläche (32) aufweist.

## Beschreibung

Die Erfindung betrifft eine Warnleuchte für ein Luftfahrzeug und insbesondere eine ein rotes Blitzlicht abgebende Warnleuchte für ein Flugzeug.

Außen an einem Flugzeug oder einem anderen Luftfahrzeug befinden sich eine Vielzahl von unterschiedlichen Leuchten wie Warnleuchten und Positions- bzw. Navigationsleuchten, die ihr Licht innerhalb gesetzlich vorgeschriebener Raumwinkelbereiche abgeben. Unter anderem existieren für die zivile und militärische Luftfahrt Warnleuchten, die ihr Licht in Form von Blitzlicht in weißer bzw. roter Farbe abgeben.

Bis vor einigen Jahren waren die Warnleuchten im Außenbereich eines Luftfahrzeuges mit Xenon-Lampen als Leuchtmittel ausgestattet. Diese bekannten Warnleuchten umfassten ein Gehäuse mit einer domartigen lichtdurchlässigen Abdeckung, die im am Luftfahrzeug montierten Zustand der Warnleuchte der Umgebungsluft ausgesetzt ist. Aus aerodynamischen Gründen weisen die Abdeckungen der bekannten Warnleuchten eine im wesentlichen tropfen- oder eiförmige Gestaltung mit einem in Flugrichtung weisenden vorderen Abdeckungsbereich und einem entgegengesetzt zur Flugrichtung weisenden hinteren Abdeckungsbereich auf.

Zur Befestigung der Abdeckung an einem am Luftfahrzeug angebrachten Unterteil des Gehäuses dient ein Montagehalteelement in Form eines Ringes, der den Rand der Abdeckung umgibt und von dem die Abdeckung aufragt.

In den letzten Jahren werden in zunehmendem Maße für die Außenbeleuchtung von Luftfahrzeugen LEDs als Leuchtmittel eingesetzt. Diese lichtaussendenden Halbleiterdioden weisen eine wesentlich längere Lebensdauer auf und sind bei weitem nicht so störanfällig wie Xenon-Lampen.

Überdies benötigen LEDs elektronische Ansteuereinheiten, die kleiner und leichtgewichtiger sind als die Vorschaltelektronik von Xenon-Blitzleuchten. Problematisch allerdings bei LEDs ist deren Wärmeempfindlichkeit. Ferner ist ihre Abstrahlcharakteristik für die Anwendung in Warn- bzw. Positionsleuchten von Flugzeugen nicht unbedingt geeignet. Daher sind die zur Zeit verfügbaren LED-Warnleuchten mit Xenon-Blitzleuchten vergleichbarer Lichtleistung noch sehr groß und schwer, um die gewünschte Abstrahlcharakteristik der Warnleuchte mit einer guten Wärmeabfuhr zu verbinden.

Aus WO-A-2006/091225 ist eine Warnleuchte für Luftfahrzeuge bekannt, die mit einem Kühlkörper versehen ist, der Kühlrippen aufweist, die der während des Flugs eines Luftfahrzeuges über das Gehäuse der Warnleuchte entlang streichenden Luftströmung ausgesetzt ist. Der Kühlkörper der bekannten Warnleuchte dient zur Abfuhr der von den LEDs erzeugten Verlustleistung in Form von Wärme. Hierzu befindet sich der Kühlkörper auf der Abdeckung, was nicht weiter problematisch ist, da die Warnleuchte ihr Blitzlicht im wesentlichen über 360° seitlich und schräg nach oben, d.h. direkt über der Warnleuchte, also da, wo bei der bekannten Warnleuchte der Kühlkörper bzw. dessen Kühlrippen angeordnet sind, kein Licht abgeben muss.

Ein gewisser Nachteil der bekannten Warnleuchte ist allerdings darin zu sehen, dass diese als rotationssymmetrischer, kegelstumpfähnlicher Körper ausgebildet ist, der keine optimalen aerodynamischen Eigenschaften aufweist und damit den Luftwiderstand (parasitic drag) nachteilig beeinflusst.

Aufgabe der Erfindung ist es, eine Warnleuchte für ein Luftfahrzeug zu schaffen, die LED-Leuchtmittel verwendet und deren Gehäuse bzw. Abdeckung über eine aerodynamisch vorteilhafte Form verfügt, wobei sämtliche Anforderungen für die räumliche Lichtverteilung bei Warnleuchten für Luftfahrzeuge erfüllt sind.

Zur Lösung dieser Aufgabe wird mit der Erfindung eine Warnleuchte für ein Luftfahrzeug vorgeschlagen, die versehen ist mit
- einem Gehäuse, das eine im am Luftfahrzeug montierten Zustand des Gehäuses der Umgebungsluft ausgesetzte lichtdurchlässige Abdeckung mit einem vorderen Abdeckungsbereich und einem hinteren Abdeckungsbereich aufweist,
- einem Montagehalteelement zur Befestigung der Abdeckung am Luftfahrzeug und/oder an einem Unterteil des Gehäuses, wobei ein Rand der Abdeckung von einem Rand des Montagehalteelements überdeckt ist und von diesem aufragt,
- einem Leuchtmittel mit mindestens einer LED (, die innerhalb eines von der Abdeckung begrenzten Bereichs angeordnet ist, und
- einem Kühlkörper für die mindestens eine LED, wobei der Kühlkörper eine im am Luftfahrzeug montierten Zustand des Gehäuses der Umgebungsluft ausgesetzte Kühloberfläche aufweist

Bei dieser Warnleuchte ist erfindungsgemäß vorgesehen,
- dass der vordere Abdeckungsbereich von einem vorderen Abdeckungselement aus einem lichtdurchlässigen ersten Material gebildet ist,
- dass der hintere Abdeckungsbereich von einem hinteren Abdeckungselement aus einem lichtdurchlässigen zweiten Material gebildet ist und
- dass der Kühlkörper unter Trennung des vorderen Abdeckungselements von dem hinteren Abdeckungselement zwischen diesen angeordnet ist, wobei seine Kühloberfläche Teil einer von dem vorderen und dem hinteren Abdeckungselement vorgegebenen Außenkontur der Abdeckung des Gehäuses ist und einen oberen Bereich sowie sich an diese anschließende, gegenüberliegende Seitenbereiche aufweist.
   Die erfindungsgemäße Warnleuchte ist mit einem Gehäuse versehen, das ein Unterteil zur Befestigung an dem Luftfahrzeug und eine lichtdurchlässige Abdeckung aufweist. Die lichtdurchlässige Abdeckung ist über ein ringförmiges Montagehalteelement an dem Unterteil des Gehäuses bzw. an dem Luftfahrzeug gehalten. Dabei umgibt das Montagehalteelement den Rand der Abdeckung, die sich vom Rand aus domartig nach oben erstreckt. Dabei kann die Abdeckung eine aerodynamische Form aufweisen, die beispielsweise tropfen- oder eiförmig oder auch bionisch, d.h. von den stromlinienförmigen Gestaltungen von Lebewesen abgeleitet ist.

Erfindungsgemäß ist nun die Abdeckung der Warnleuchte zweiteilig ausgebildet und umfasst ein in Flugrichtung weisendes vorderes Abdeckungselement aus einem lichtdurchlässigen ersten Material und ein entgegengesetzt zur Flugrichtung weisendes hinteres Abdeckungselement aus einem lichtdurchlässigen zweiten Material, das gleich dem oder verschieden von dem ersten Material ist. Zwischen beiden Abdeckungselementen befindet sich sozusagen als Zwischenstück ein Kühlkörper bzw. Teile eines Kühlkörpers, wobei die Kühlkörperoberfläche zusammen mit den beiden Abdeckungselementen die aerodynamische Form bzw. die Außenkontur der Abdeckung, d.h. des vom Unterteil des Gehäuses aufragenden Bereichs der Warnleuchte bilden. Der Kühlkörper trennt dabei die beiden Abdeckungselemente voneinander und weist einen quer zur Flugrichtung weisenden oberen Bereich sowie sich an diese anschließende, lateral zur Flugrichtung weisende gegenüberliegende Seitenbereiche auf. Wie die beiden Abdeckungselemente ist der Kühlkörper in seinen Seitenbereichen vorteilhafter Weise von dem Montagehalteelement umgeben bzw. umfasst.

Bei der erfindungsgemäßen Warnleuchte befindet sich der Kühlkörper mit seinen der Luftströmung ausgesetzten Kühlflächenbereichen im oberen Bereich sowie in den Seitenbereichen der Warnleuchte. Direkt oberhalb der Warnleuchte braucht diese nach den geltenden Bestimmungen kein Licht abzugeben.

Die Lichtabgabe an den Seitenbereichen der Kühloberfläche des Kühlkörpers wird durch LED-Leuchtmittel realisiert, die - in Flugrichtung betrachtet - beidseitig, also in Flugrichtung vor sowie in Flugrichtung hinter den Seitenbereichen innerhalb der beiden Abdeckungselemente, angeordnet sind und Licht zur Seite bzw. schräg nach oben abstrahlen.

Der Vorteil des erfindungsgemäßen Aufbaus der Warnleuchte mit zwei Abdeckungselementen als lichtdurchlässige Abdeckung besteht darin, dass man nun in der Wahl der transparenten Materialien für die beiden Abdeckungselemente frei ist. Während das in Flugrichtung weisende vordere Abdeckungselement vorzugsweise aus einem gegen Erosion widerstandsfähigen Material wie beispielsweise Glas gefertigt sein kann, kann man als transparentes Material für das hintere Abdeckungselement ein weniger erosionsbeständiges Material wie beispielsweise Kunststoff verwenden. Das aus Kunststoff gefertigte hintere Abdeckungselement kann durch ausgeformte zur Innenseite weisende Bereiche Lichteinkopplungsflächen aufweisen, durch die das Licht insbesondere in den nach hinten weisenden, unter geringem Winkel zur Flugrichtung verlaufenden Abstrahlrichtungen bzw. seiner Intensitäten verstärkt werden kann. Die Materialien beider Abdeckungselemente können aber auch gleich sein.

Der Vorteil des erfindungsgemäßen Konzeptes besteht ferner darin, dass die bekannten auf Xenon-Lichttechnik beruhenden Warnleuchten problemlos ausgetauscht werden können, da die erfindungsgemäße Warnleuchte die gleiche tropfen- oder eiförmige Gestalt wie die bekannten Warnleuchten aufweisen kann. Dies bedeutet eine wesentliche Vereinfachung beim Austausch der Außenbeleuchtung von Luftfahrzeugen durch neue Beleuchtungstechniken, wobei sich das Gewicht der mit LED-Leuchtmittein ausgestatteten erfindungsgemäßen Warnleuchte gegenüber den Xenon-Blitzlampen deutlich reduzieren lässt. Überdies profitiert die erfindungsgemäße Warnleuchte von der Störunanfälligkeit und langen Lebensdauer von LED-Leuchtmitteln.

Wie bereits oben erwähnt, bedarf es bei Warnleuchten für Luftfahrzeuge keiner Lichtabgabe direkt oberhalb der Abdeckung der Warnleuchte. Vielmehr muss das Licht rundum über 360° sowie leicht schräg nach oben abgegeben werden. Dies bedeutet, dass der obere Bereich der Kühloberfläche des Kühlkörpers zwischen dem vorderen und dem hinteren Abdeckungsbereich eine relativ große Erstreckung aufweisen kann, während die beiden sich bis zum Montagehalteelement erstreckenden Seitenbereiche der Kühloberfläche schlanker bzw. schmaler ausgeführt sein sollten. Dies ist mit dem erfindungsgemäßen Aufbaukonzept der Warnleuchte problemlos realisierbar.

Die Abfuhr der thermischen Verlustleistung der LEDs erfolgt hauptsächlich über die dem Luftstrom ausgesetzte Kühloberfläche des Kühlkörpers. Zusätzlich kann in vorteilhafter Weiterbildung der Erfindung der Kühlkörper an seinen die Seitenbereiche der Kühloberfläche bildenden Abschnitten thermisch mit dem Montagehalteelement gekoppelt sein. Auf diese Weise wird also Wärme auch über das Montagehalteelement und von dort gegebenenfalls weiter über die Außenhaut des Luftfahrzeuges abgeführt.

Durch die Beibehaltung der tropfen- oder eiförmigen Außenkontur der Warnleuchte ist eine einfache Entformung der beiden Abdeckungselemente bei deren Herstellung gegeben. Dabei lassen sich dann, wie bereits oben erwähnt, Lichtleiterfunktionen, in vorteilhafter Weise aus transparentem Kunststoffmaterial bestehend, in das hintere Abdeckungselement integrieren. Dies wiederum erlaubt es, die gesetzlichen Anforderungen an die Intensität des abgestrahlten Lichts im in Flugrichtung betrachtet hinteren Teil der Warnleuchte einzuhalten, und zwar unter Verwendung von LED-Leuchtmitteln.

Der erfindungsgemäß vorgeschlagene mehrteilige Aufbau der dom- bzw. kappenförmigen Abdeckung bringt es mit sich, dass die Übergänge zwischen dem Kühlkörper einerseits und den beiden Abdeckungselementen andererseits witterungsbeständig und insbesondere feuchtigkeitsdicht ausgeführt sind.
Hierzu sieht eine Weiterbildung der Erfindung vor, dass der Kühlkörper an seinem in Flugrichtung weisenden vorderen Ende sowie an seinem entgegengesetzt zur Flugrichtung weisenden hinteren Ende jeweils einen Rand aufweist, der überlappend mit einem Rand des vorderen bzw. hinteren Abdeckungselements zusammenwirkt bzw. überlappend und/oder ineinander greifend ausgebildet ist, wobei sich zwischen den Rändern jeweils ein Dichtungsmittel befindet. Für diese mechanische Anbindung des Kühlkörpers einerseits und der beiden Abdeckungselemente andererseits existieren gemäß einer vorteilhaften Weiterbildung der Erfindung verschiedene Lösungsansätze, wie beispielsweise in einander gegenüberliegende Nuten der überlappenden Ränder eingelassene Dichtschnüre oder andere Dichtelemente, Nut-Feder-Ausbildungen oder aber sogenannte Aeroseal-Materialien, wie sie in der Luftfahrttechnik bekannt sind und eingesetzt werden.

Als aerodynamisch vorteilhaft hat sich eine überlappende Randstruktur herausgestellt, bei der der Rand des vorderen Abdeckungselements gegenüber der angrenzenden Kühloberfläche des Kühlkörpers nach außen vorsteht und bei der ferner der dem hinteren Abdeckungselement zugewandte Rand des Kühlkörpers gegenüber dem angrenzenden hinteren Abdeckungselement ebenfalls nach außen vorsteht, und zwar in beiden Fällen zweckmäßigerweise in einem Bereich zwischen 0,1 mm bis 0,5 mm und vorzugsweise um 0,3 mm.

Die Erfindung wird nachfolgend anhand eines Ausführungsbeispiels der Erfindung näher erläutert. Im Einzelnen zeigen dabei:
- Fig. 1: eine Seitenansicht einer Warnleuchte mit im wesentlichen tropfen- bzw. eiförmiger, aerodynamisch günstiger Außenkontur ihrer Abdeckung- und Kühlkörperoberflächenkonfiguration und
- Fig. 2: einen Schnitt entlang der Linie II-II der Fig. 1 durch die Abdeckung und den Kühlkörper und ohne Darstellung des Unterteils des Gehäuses der Warnleuchte.

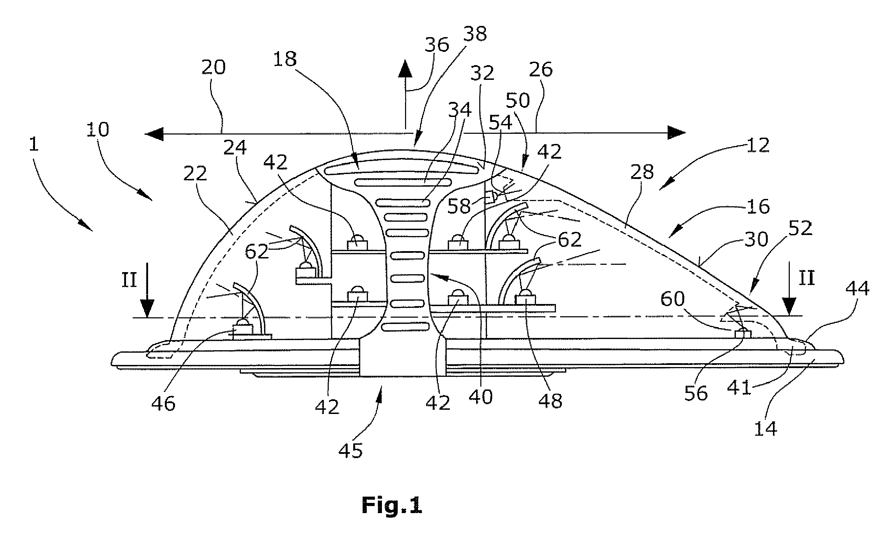

Fig. 1 zeigt in Seitenansicht und teilweise geschnitten eine Blitzlicht-Warnleuchte 1, die ein Gehäuse 10 mit einem Oberteil 12 und einem plattenförmigen Unterteil 14 aufweist, das sich im montierten Zustand der Warnleuchte 1 an der Außenhaut eines Luftfahrzeuges, beispielsweise eines Flugzeuges, befindet.

Das Oberteil 12 des Gehäuses 10, das vom Unterteil 14 aufragt, umfasst eine zweiteilige lichtdurchlässige Abdeckung 16 sowie einen Kühlkörper 18. Die Abdeckung 16 weist ein in Flugrichtung 20 weisendes vorderes lichtdurchlässiges Abdeckungselement 22 aus beispielsweise Glas bzw. mit einer glasharten Außenfläche 24 auf und ist darüber hinaus mit einem entgegengesetzt zur Flugrichtung 20, d.h. in Richtung des Pfeils 26 weisenden hinteren Abdeckungselement 28 aus transparentem Kunststoff und mit einer Außenfläche 30 versehen.

Zwischen diesen beiden Abdeckungselementen 22,28 befindet sich der Kühlkörper 18, dessen Außenfläche die Kühloberfläche 32 gegebenenfalls mit parallel zur Flugrichtung 20 verlaufenden Nuten oder Rippen 34 und zusammen mit den Außenflächen 24,30 der Abdeckung 16 die tropfen-, dom- oder eiförmige Außenkontur der Warnleuchte 1 bildet. Die Kühloberfläche 32 des Kühlkörpers 18 erstreckt sich dabei in Flugrichtung 20 betrachtet über 180° und weist einen nach oben in Richtung des Pfeils 36 weisenden oberen Bereich 38 sowie sich darin anschließende gegenüberliegende, lateral zur Flugrichtung 20 weisende Seitenbereiche 40 auf. Diese dreigeteilte Abdeckung 16 mit Kühloberfläche 32 ist an ihrem auf dem Unterteil 14 aufliegenden, umlaufenden Rand 41 von einem ringförmigen bzw. flanschartigen Montagehalteelement 44 aus Metall umgriffen, das mit dem Unterteil 14 des Gehäuses 10 der Warnleuchte 1 beispielsweise verschraubt ist.

Wie anhand von Fig. 1 zu erkennen ist, ist die Erstreckung des Kühlkörpers 18 in seinem oberen Bereich 38 zwischen dem vorderen und dem hinteren Abdeckungselement 22,28 größer als innerhalb seiner gegenüberliegenden Seitenbereiche 40. Der Kühlkörper sollte zur guten thermischen Anbindung an die die Warnleuchte 10 umgebende Luft eine vergleichsweise große Kühloberfläche 32 aufweisen. Da die Warnleuchte 1 direkt nach oben, also in Richtung des Pfeils 36, kein Licht abgeben muss, kann der Kühlkörper im Bereich 38 seiner Kühloberfläche 32 relativ großflächig ausgebildet sein. Demgegenüber bedarf es der Abstrahlung von Licht im Bereich der Seitenbereiche 40 der Kühloberfläche 32 des Kühlkörpers 18. Daher ist die Kühloberfläche 32 in den Seitenbereichen 40 schmaler ausgeführt, so dass dort durch LEDs 42 für eine ausreichende Abstrahlung von Licht mit den gesetzlichen Anforderungen entsprechender Intensität und Verteilung gesorgt werden kann.

Wie anhand von Fig. 1 zu erkennen ist, lässt sich der Kühlkörper 18 thermisch vorteilhaft an das Montagehalteelement 44 anbinden. Dies ist in Fig. 1 bei 45 gezeigt.

Wie der Kühlkörper 18, so besteht auch das Montagehalteelement 44 aus einem Metall, insbesondere einer Metalllegierung, bei der es sich vorzugsweise um eine Aluminiumlegierung handelt. Auch das Unterteil 14 des Gehäuses 10 der Warnleuchte 1 besteht zweckmäßigerweise aus metallischem Material.

Neben den LEDs 42, die für die Seitenabstrahlung des Lichts der Warnleuchte 1 sorgen, weist die Warnleuchte 1 weitere LEDs 46 zur Abstrahlung von Licht in Flugrichtung 20 sowie in den geforderten Höhen- und Seitenwinkeln dazu auf. Auf gleiche Art und Weise sorgen weitere LEDs 48 für die Lichtabgabe entgegengesetzt zur Flugrichtung (also in Richtung des Pfeils 26) sowie in den geforderten Höhen- und Seitenwinkeln dazu. Es sei an dieser Stelle angemerkt, dass in Fig. 1 bei weitem nicht sämtliche für die geforderte Lichtverteilung sowie Lichtintensitätsverteilung der Warnleuchte 1 erforderlichen LEDs dargestellt sind.
Wegen des Schrägverlaufs des hinteren Abdeckungselements 28 bereitet die Auskopplung des Lichts der LEDs innerhalb kleiner Höhen- und Seitenwinkeln in zur Flugrichtung 20 entgegengesetzter Richtung (Pfeil 26) gewisse Schwierigkeiten.

Hier ist es von Vorteil, dass es aufgrund der Materialwahl "Kunststoff" für das hintere Abdeckungselement 28 möglich ist, in das Abdeckungselement 28 lichttechnische Funktionen zu integrieren, wie dies in Fig. 1 bei 50 und 52 gezeigt ist. In diesen Bereichen weist das hintere Abdeckungselement 28 innenliegende Lichteinkoppelflächen 54,56 auf, denen gegenüberliegend LEDs 58,60 angeordnet sind, die wiederum am Kühlkörper 18 bzw. am Unterteil 14 angeordnet sind. Das hintere Abdeckungselement 28 weist also, wie bei 50 und 52 angedeutet, partiell Lichtleiterfunktion auf, womit sich gezielt die Lichtverteilung und Lichtintensität den gesetzlichen Anforderungen entsprechend und unter Verwendung möglichst weniger LEDs anpassen und beeinflussen lassen.

Zu Fig. 1 sei ferner noch angemerkt, dass dort mit 62 Reflektoren gemeint sind, die einzelnen LEDs oder Gruppen von LEDs zugeordnet sein können. Neben reflektiven optischen Elementen (wie z.B. die Reflektoren 62) können bei der Warnleuchte 1 alternativ oder auch zusätzlich refraktive optische Elemente wie z.B. Linsen für die Lichtverteilung eingesetzt werden.

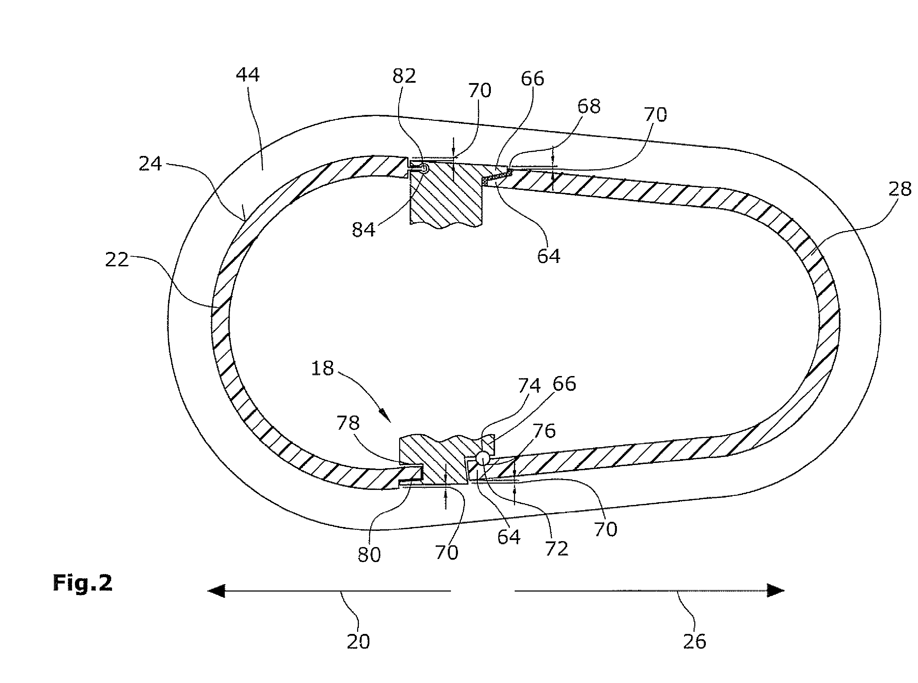

Fig. 2 zeigt einen Horizontalschnitt entlang der Linie II-II der Fig. 1 durch die Abdeckung 16, wobei zusätzlich noch der Montagehaltering 44 dargestellt ist. Der Kühlkörper 18 ist ebenfalls nur partiell dargestellt bzw. geschnitten dargestellt.

Fig. 2 zeigt mehrere Varianten einer möglichen mechanischen Verbindung des Kühlkörpers 18 mit dem vorderen und dem hinteren Abdeckungselement 22,28. So zeigt Fig. 2 oben rechts eine mögliche Verbindung des hinteren Abdeckungselements 28 mit dem Kühlkörper 18, bei der beide einander überlappende Ränder 64,66 mit einem dazwischen angeordneten Abdichtmaterial 68 aufweisen. Die Außenfläche 24 des hinteren Abdeckungselements 28 springt dabei um den Abstand 70 gegenüber der Kühloberfläche 32 in den Seitenbereichen 40 des Kühlkörpers 18 zurück.

Wie in Fig. 2 unten rechts gezeigt, kann die Anbindung des Kühlkörpers 18 an das vordere und/oder hintere Abdeckungselement 22,28 aber auch durch eine im Querschnitt O-ringförmige Dichtschnur 72 erfolgen, die in gegenüberliegende Nuten 74,76 der überlappenden Ränder 64,66 von Kühlkörper 18 und Abdeckungselement 22 bzw. 28 eingelegt ist.

Bezogen auf Fig. 2 links des Kühlkörpers 18 sind zwei weitere mögliche Varianten der mechanischen Anbindung von Kühlkörper 18 und Abdeckungselement 22 bzw. 28 gezeigt. Unten links ist dabei eine nut-/federähnliche Ausgestaltung 78,80 wiedergegeben, während in Fig. 2 oben links eine keder-ähnliche Verbindungskonfiguration gezeigt ist. Im letztgenannten Fall ist an dem (in diesem Ausführungsbeispiel vorderen) Abdeckungselement 22 eine wulstförmige Verdickung 82 angeformt bzw. einstückig ausgebildet, die in eine Aufnahmenut 84 mit Hinterschnitt eingesetzt ist.

Es sei an dieser Stelle angemerkt, dass die in Fig. 2 gezeigten mechanischen Verbindungen des Kühlkörpers 18 mit den beiden Abdeckungselementen 22,28 unabhängig davon ausgeführt werden können, ob nun die Abdeckungselemente 22,28 aus Glasmaterial, also einem erosionsbeständigen Material, oder aus Kunststoff, also einem weniger erosionsbeständigen Material bestehen. Auch ist es möglich, die Fügung der Abdeckungselemente 22,28 mit dem Kühlkörper 18 durch zwei gegenüberliegende Schräge, in wesentlich parallele Flächen an den zu fügenden Teilen zu realisieren, was einen sehr guten Toleranzausgleich ermöglicht.

Überdies sei angemerkt, dass bei sämtlichen Ausgestaltungen der Verbindung jeweils das in Flugrichtung 20 betrachtet hintere Teil (also Kühlkörper gegenüber vorderem Abdeckungselement 20 bzw. hinteres Abdeckungselement 24 gegenüber Kühlkörper 18) nach innen einwärts versetzt angeordnet ist. Dieser zurückliegende Versatz ist in Fig. 2 jeweils bei 70 kenntlich gemacht. Ganz allgemein kann zur mechanischen Anbindung zwischen den Abdeckungselementen und dem Kühlkörper gesagt werden, dass diese entsprechend den üblicherweise unterschiedlichen Ausdehnungskoeffizienten, der Aushöhlung der Fugen durch Erosion und der dauerhaften Dichtigkeit und der geforderten Schlagzähfähigkeit gegen Fremdobjekte gestaltet sein sollte. Prinzipiell sind dazu insbesondere dauerelastische, formschlüssige Verbindungen geeignet, wie es bei den Varianten O-Ring, Nut-Feder und Wulst/Aufnahmenut gegeben ist.

Besonders zweckmäßig ist es, wenn die Aushärtung von aushärtbaren dauerelastischen Abdichtelementen in der Endlage, also nach der Montage und nach dem Zusammenbau erfolgt, so dass lokale Materialspannungen vermieden und Fertigungstoleranzen aufgenommen werden können. Ebenfalls von Vorteil ist, wie bereits oben erwähnt, dass Zurückverlegen der sich jeweils in entgegengesetzt zur Flugrichtung betrachtet anschließenden Fläche um vorzugsweise 0,3 mm +/- 0,25 mm, da sich diese Größenordnung als besonders vorteilhafte Abwägung als Spalt- und Kantenschutz vor Erosion, Luftwiderstand und umschließendem Volumen gezeigt hat.

## Patentansprüche

1. Warnleuchte für ein Luftfahrzeug, mit
- einem Gehäuse (10), das eine im am Luftfahrzeug montierten Zustand des Gehäuses der Umgebungsluft ausgesetzte lichtdurchlässige Abdeckung (12) mit einem vorderen Abdeckungsbereich und einem hinteren Abdeckungsbereich aufweist,
- einem Montagehalteelement (44) zur Befestigung der Abdeckung am Luftfahrzeug und/oder an einem Unterteil (14) des Gehäuses (10), wobei ein Rand (41) der Abdeckung (12) von einem Rand des Montagehalteelements (44) überdeckt ist und von diesem aufragt,
- einem Leuchtmittel mit mindestens einer LED (42,46,58,60), die innerhalb eines von der Abdeckung (12) begrenzten Bereichs angeordnet ist, und
- einem Kühlkörper (18) für die mindestens eine LED (42,46,58,60), wobei der Kühlkörper (18) eine im am Luftfahrzeug montierten Zustand des Gehäuses (10) der Umgebungsluft ausgesetzte Kühloberfläche (32) aufweist,
**dadurch gekennzeichnet,**
- **dass** der vordere Abdeckungsbereich von einem vorderen Abdeckungselement (22) aus einem lichtdurchlässigen ersten Material gebildet ist,
- **dass** der hintere Abdeckungsbereich von einem hinteren Abdeckungselement (28) aus einem lichtdurchlässigen zweiten Material gebildet ist und
- **dass** der Kühlkörper (18) unter Trennung des vorderen Abdeckungselements (22) von dem hinteren Abdeckungselement (28) zwischen diesen angeordnet ist, wobei seine Kühloberfläche (32) Teil einer von dem vorderen und dem hinteren Abdeckungselement (22,28) vorgegebenen Außenkontur der Abdeckung (12) des Gehäuses (10) ist und einen oberen Bereich (38) sowie sich an diese anschließende, gegenüberliegende Seitenbereiche (40) aufweist.

2. Warnleuchte nach Anspruch 1, **dadurch gekennzeichnet, dass** der obere Bereich (38) der Kühloberfläche (32) des Kühlkörpers (18) eine größere Erstreckung zwischen dem vorderen und dem hinteren Abdeckungselement (22,28) aufweist als die beiden Seitenbereiche (40) der Kühloberfläche (32).

3. Warnleuchte nach Anspruch 1 oder 2, **dadurch gekennzeichnet, dass** der Kühlkörper (18) an seinen die Seitenbereiche (40) seiner Kühloberfläche (32) bildenden Abschnitte thermisch mit dem Montagehalteelement (44) gekoppelt ist.

4. Warnleuchte nach einem der Ansprüche 1 bis 3, **dadurch gekennzeichnet, dass** das hintere Abdeckungselement (28) aus einem Kunststoffmaterial besteht und Lichtleiterabschnitte (50,52) zur Auskopplung von Licht des LED-Leuchtmittels aufweist, wobei das Leuchtmittel LEDs (58,60) aufweist, deren Licht in die Lichtleiterabschnitte (50,52) einspeisbar ist.

5. Warnleuchte nach einem der Ansprüche 1 bis 4, **dadurch gekennzeichnet, dass** die Außenkontur der Abdeckung (12) zusammen mit der Kühloberfläche (38) des Kühlkörpers (18) im wesentlichen tropfen- oder eiförmig oder bionisch ist.

6. Warnleuchte nach einem der Ansprüche 1 bis 5, **dadurch gekennzeichnet, dass** innerhalb des vorderen und des hinteren Abdeckungselements (20,28) am Unterteil (14) des Gehäuses (10) und/oder an dem Kühlkörper (18) eine Vielzahl von LEDs (42,46,58,60) zur Abgabe von Licht als im wesentlichen 360° Rundumbeleuchtung mit schräg nach oben gerichteter Lichtabstrahlung angeordnet ist.

7. Warnleuchte nach einem der Ansprüche 1 bis 6, **dadurch gekennzeichnet, dass** der Kühlkörper (18) sowie das vordere und hintere Abdeckungselement (22,28) jeweils einander überlappende und/oder ineinander greifende Ränder (66,64) aufweisen, zwischen denen ein Abdichtungsmittel (68,72) angeordnet ist.

8. Warnleuchte nach einem der Ansprüche 1 bis 7, **dadurch gekennzeichnet, dass** ein Rand des vorderen Abdeckungselements (22) gegenüber der angrenzenden Kühloberfläche (32) des Kühlkörpers (18) nach außen vorsteht und dass ein dem hinteren Abdeckungselement (28) zugewandte Rand des Kühlkörpers (18) gegenüber dem angrenzenden hinteren Abdeckungselement (28) nach außen vorsteht.

9. Warnleuchte nach einem der Ansprüche 1 bis 8, **dadurch gekennzeichnet, dass** das vordere Abdeckungselement (22) aus Glas besteht und/oder dass das hintere Abdeckungselement (28) aus Kunststoff besteht.

10. Warnleuchte nach einem der Ansprüche 1 bis 9, **dadurch gekennzeichnet, dass** der Montagehaltering (44) aus einem metallischen Werkstoff besteht.

11. Warnleuchte nach einem der Ansprüche 1 bis 10, **dadurch gekennzeichnet, dass** das Unterteil (14) des Gehäuses (10) einen metallischen Werkstoff aufweist.

12. Warnleuchte nach einem der Ansprüche 1 bis 11, **dadurch gekennzeichnet, dass** das erste Material des vorderen Abdeckungselements (22) in einem größeren Ausmaß gegen Erosionen widerstandsfähig ist als das zweite Material des hinteren Abdeckungselements (28).
